# EUROPEAN PATENT APPLICATION

(11) **EP 4 708 780 A1**
(43) Date of publication of application: **11.03.2026**
(21) Application number: 24198428.5
(22) Date of filing: 04.09.2024
(51) Int. Cl.: H04L 12/40, H04L 12/46

(54) **A METHOD FOR MULTIPLEXING AND DEMULTIPLEXING OF VEHICLE COMMUNICATIONS AND A COMMUNICATION SYSTEM FOR VEHICLE COMMUNICATIONS**

(71) Applicant: KB Intellectual Property GmbH & Co. KG, 82049 Pullach (DE)
(72) Inventor: NEMETH, Huba, 80809 München (DE); SKRIBA, Daniel, 80809 München (DE); UNGVÁRSZKY, Balázs, 80809 München (DE); KOVÁCS, Richárd, 80809 München (DE)

(57) **Abstract**

A method for multiplexing a first vehicle communication (10) and a second vehicle communication (20) is disclosed. The first vehicle communication (10) is adapted to use a first frequency band on a first transmission medium (150). The second communication (20) is adapted to use a second frequency band that differs from the first frequency band on a second transmission medium (250) that differs from the first transmission medium, the first transmission medium (150) and the second transmission medium (250) being coupled by coupling circuitry (300). The method includes: feeding (S110) the first vehicle communication (10) from the first transmission medium (150) to the coupling circuitry (300); multiplexing (S120), by the coupling circuitry (300), the first vehicle communication (10) and second vehicle communication (20) into a multiplexed data stream (30); and transmitting (S130) the multiplexed data stream (30) over the second transmission medium (20).

## Description

The present invention relates to a method for multiplexing vehicle communications, a method for demultiplexing vehicle communications, a communication system for vehicle communications and, in particular, to a multiplexing controller area network, and Ethernet on a shared medium.

Electronic control units, ECUs, of both trucks and trailers have multiple communication interfaces for implementing different functionalities. These may include, inter alia, a local area interconnect network (LIN), as it is defined in the standard ISO 17987, a controller area network (CAN), as defined in ISO 11898, and an automotive ethernet as defined in 802.3 BW-2015 (CL 96). Further communication demands are generated by autonomous vehicles with extended sensor networks and multiple ECUs which usually also need an increased data throughput to satisfy high safety requirements. In this setup, some of the main ECUs are connected by parallel communication channels.

The numerous sensor data collected in autonomous vehicles (e.g. from different environmental sensors) can be processed and forwarded as objects and in some cases as raw data. To ensure a failsafe operation when relying on this data, a redundant communication channel should be implemented between the different ECUs to achieve a highest possible functional safety.

A reliable physical communication medium in vehicles is a wire. However, wired communications need connectors and, when compared to electronics usually enclosed in a metallic box, wires are more often subject to damages. For example, broken lines, bent metallic pins in connectors, or short circuits will have negative effects on the ability to communicate and may jeopardies the reliability of the whole system. This may lead to a degradation or even to an interruption of communication channels.

To mitigate these risks, conventional communication systems utilize a duplication of communication channels or route the traffic through different protocols. However, it is often not possible to have additional wirings for further channels. Likewise, for utilizing another protocol the needed data bandwidth is often not available. The data bandwidth for the available communication channels may be already close to its maximum capacity so that adding additional data through these communication channels might not be possible or is at least very limited. The remaining capacity may simply not suffice. Therefore, negative effects on the reliability of the communication cannot be excluded for these conventional systems.

Therefore, there is a demand for providing redundant vehicle communications over a given network of communication channels and to meet the increased requirements in implementing safety critical functions.

At least some of the problems of the conventional device as described before are overcome by the methods of claim 1 or of claim 6 and by a communication system according to claim 9. The dependent claims refer to further advantageous realizations of the subject matter of the independent claims.

The present invention relates to a method for multiplexing a first vehicle communication and a second vehicle communication. The first vehicle communication may be adapted to use a first frequency band on a first transmission medium. The second communication may be adapted to use a second frequency band that differs from the first frequency band on a second transmission medium that differs from the first transmission medium. The first transmission medium and the second transmission medium being coupled by a coupling circuitry. The method includes:
- feeding the first vehicle communication from the first transmission medium to the coupling circuitry;
- multiplexing, by the coupling circuitry, the first vehicle communication and second vehicle communication into a multiplexed data stream; and
- transmitting the at least a part of the multiplexed data stream over the second transmission medium.

The first vehicle communication and the second vehicle communication utilize thus wired transmissions (non-aerial) such as different bus-infrastructures implemented in the vehicle. The coupling circuitry can be a coupling device which includes a multiplexing and/or a demultiplexing component to multiplex and/or demultiplex the vehicle communications. According to embodiments, the first and the second transmission media may not only include the available data-buses but may also include the corresponding connections (e.g. plugs) to the bus infrastructure. Therefore, the first and second transmission media start already at the interfaces connected to a node or a transceiver which is connected to a respective transmission medium by a corresponding interface.

Optionally, the step of feeding is performed by at least one switching device that opens a data channel from the first communication medium to the coupling circuity to transmit a copy of or to divert the first vehicle communication to the coupling circuitry. Therefore, this enables a redundant communication for the first vehicle communication. The switching device may also be included in the coupling circuitry or may represent a separate component not integrated in the corresponding coupling circuitry.

Optionally, the method further includes detecting a disruption of the first vehicle communication. Upon detecting the disruption, the step of feeding may start. For this, at least one error detector may be included in a first transceiver and/or in a second transceiver. The detection of the disruption may be triggered by a missing confirmation of a sent data package. If this confirmation is missing, the respective transceiver may infer that the transmission channel is not operating correctly.

Optionally, the first vehicle communication is diverted (re-direct) to the coupling circuitry and the step of transmitting may further includes transmitting the at least a part of the multiplexed data stream also over the first transmission medium. The part transmitted over the first transmission medium may differ from the part transmitted over the second transmission medium. This may allow an optimized or maximized data throughput because the available bandwidth has increased (e.g. by using both transmission media for high-speed communications). The part transmitted over the first transmission medium may by the same as the part transmitted over the second transmission medium (it may be also the whole multiplexed data stream). This allows a redundant communication of two copies of a given multiplexed data stream. In other words, the multiplexed data stream can be transmitted in parallel or simultaneously over the first transmission medium as well as over the second transmission medium (if both operate flawlessly). Alternatively, since the multiplexed data stream includes all information to be transmitted, it will be transmitted only over one transmission medium.

Optionally, a (maximal) data transmission rate of the first vehicle communication differs from a (maximal) data transmission rate of the second vehicle communication. Thus, the first vehicle communication or the second vehicle communication is a low-speed communication. Accordingly, the other one is a high-speed communication. Then, in the step of multiplexing the high-speed communication and the low-speed communication can be superposed. Therefore, in the simplest case the first vehicle communication and the second vehicle communication can be added. Since their respective frequency ranges differ significantly, they do not interfere and can be transmitted in parallel over a common transmission medium. Hence, the term "multiplexing" shall also cover this adding of the two signals onto a common transmission channel.

However, according to further embodiments, various multiplexing methods can be likewise implemented. Advantageously, a frequency multiplexing may be applied, because this allows a constant data stream (needed for many vehicle applications) and is error prone which provides the needed reliability. In standard frequency multiplexing a low-bandwidth channel is combined with a high-bandwidth channel, wherein a high frequency carrier signal "carries" the information of a low-frequency baseband signal. Both signals may also be combined in a modulator circuit, which may multiply both signals to the multiplexed data stream. In principle, embodiments may utilize this multiplexing for the high-speed communication such as Ethernet-communication and low-speed communication such as a CAN-communication. In this context, the exemplary Ethernet-signal may act as carrier signal and the CAN-Signal as a baseband signal. It is however understood that the present invention shall not be limited on this exemplary multiplexing, other multiplex methods or other modulations may be applied, too. Likewise, the carrier signal and baseband signal may be chosen differently.

Embodiments relate also to a method for demultiplexing a multiplexed data stream in a vehicle. Again, the multiplexed data stream includes a first vehicle communication and a second vehicle communication. The first vehicle communication may be adapted to use a first frequency band on a first transmission medium. The second vehicle communication may be adapted to use a second frequency band that differs from the first frequency band on a second transmission medium that differs from the first transmission medium. The first transmission medium and the second transmission medium may be coupled by a coupling circuitry. The method of demultiplexing includes
- receiving the multiplexed data stream from the second transmission medium;
- demultiplexing, by the coupling circuitry, the multiplexed data stream into the first vehicle communication and the second vehicle communication; and
- feeding the first vehicle communication into the first transmission medium and the second vehicle communication into the second transmission medium (or to respective interfaces at transceivers of the communications).

Optionally, also for this method, a (maximal) data transmission rate of the first vehicle communication differs from a (maximal) data transmission rate of the second vehicle communication. Thus, one of the first vehicle communication and the second vehicle communication is a low-speed communication and the other a high-speed communication. In the step of demultiplexing the high-speed communication can be separated from the low-speed communication in the multiplexed data stream. The step of demultiplexing may then further include filtering the first vehicle communication and/or the second vehicle communication to suppress a mixing of high-speed communication signals and low-speed communication signals (e.g. at respective transceivers of the communications). Thus, in the simplest case, the demultiplexing includes filtering the respective signals, e.g. utilizing by a high-pass filter and/or a low-pass filter to extract the first vehicle communication and the second vehicle communication.

Optionally, the first vehicle communication is a communication utilizing a standard selected from a group comprising: automotive Ethernet, controlled area network, CAN, local area interconnect network, LIN, common industrial protocol, CIP, AK-protocol. Analogously, the second vehicle communication is a communication utilizing a standard selected from a group comprising: automotive Ethernet, controlled area network, CAN, local area interconnect network, LIN, common industrial protocol, CIP, AK-protocol. The CAN-communication protocol is defined in ISO11898-1. The automotive Ethernet-protocol (formerly BroadR-Reach) is defined in IEEE 802.3bw-2015 (CL96), which is also known as 100Base-T1 and which is used in automotive industry.

Further embodiments relate to a communication system for a first vehicle communication and a second vehicle communication. The communication system includes: a first transceiver, a second transceiver, and coupling circuitry. The first transceiver is configured to perform the first vehicle communication in a first frequency band on a first transmission medium. The second transceiver is configured to perform the second vehicle communication in a second frequency band that differs from the first frequency band on a second transmission medium that differs from the first transmission medium. The coupling circuitry couples the first transmission medium and the second transmission medium and is adapted to multiplex the first vehicle communication and the second vehicle communication into a multiplexed data stream and to transmit the multiplexed data stream over the second transmission medium. The coupling circuitry may further be adapted to demultiplex the multiplexed data stream into the first communication and the second communication and to feed the first vehicle communication into the first transceiver and to feed the second vehicle communication into the second transceiver.

According to embodiments, the communication system is adapted to carry out the steps of methods as described before. It is understood that the order of method steps may differ.

Moreover, the methods described before or part thereof may also be implemented in software, or by a computer program product or storage device. Hence, embodiments of the present invention can be implemented in an ECU, e.g. by software or a software module. Therefore, embodiment relate also to a computer program having a program code for performing the method, when the computer program is executed on a processor.

Further embodiments relate to a vehicle, in particular to a commercial vehicle (e.g. a truck, trailer, but) with a communication system as defined before.

Embodiments overcome the problems of conventional systems by multiplexing existing communication protocols with an additional circuitry to work simultaneously on a shared physical medium. This may be achieved by redirecting the communication from one of the physical mediums to another one, thereby providing a redundant communication channel. Hence, embodiments can be used as a redundant communication method, e.g, if one of an exemplary CAN- or Ethernet-link is down due to a failure of the physical medium. The correctly operating physical medium can thus be used as a redundant backup. If both physical media operate correctly, embodiments can be utilized to increase the data speed on the communication channels by optimizing the allocating of the available transmission channels according to the needs.

Some examples of the systems and/or methods will be described in the following by way of examples only, and with respect to the accompanying figures, in which:
- Fig. 1A,1B: depict schematic flow diagrams of methods for multiplexing/demultiplexing of vehicle communications according to an embodiment.
- Fig. 2: depicts a vehicle communication system according to further embodiments.
- Fig. 3: illustrates a combined CAN and Ethernet communication according to embodiments.
- Fig. 4: depict further details of an exemplary Ethernet/CAN coupling with an extended circuitry according to embodiments.
- Fig. 5A: depicts an embodiment where an exemplary CAN-line and Ethernet-line are connected directly without any fault in the physical medium.
- Fig. 5B: depicts an embodiment where an exemplary CAN node 1 and an exemplary CAN node 2 cannot connect directly to each other.
- Fig. 5C: depicts an embodiment where the Ethernet line is fault so that Ethernet nodes cannot connect directly to each other.

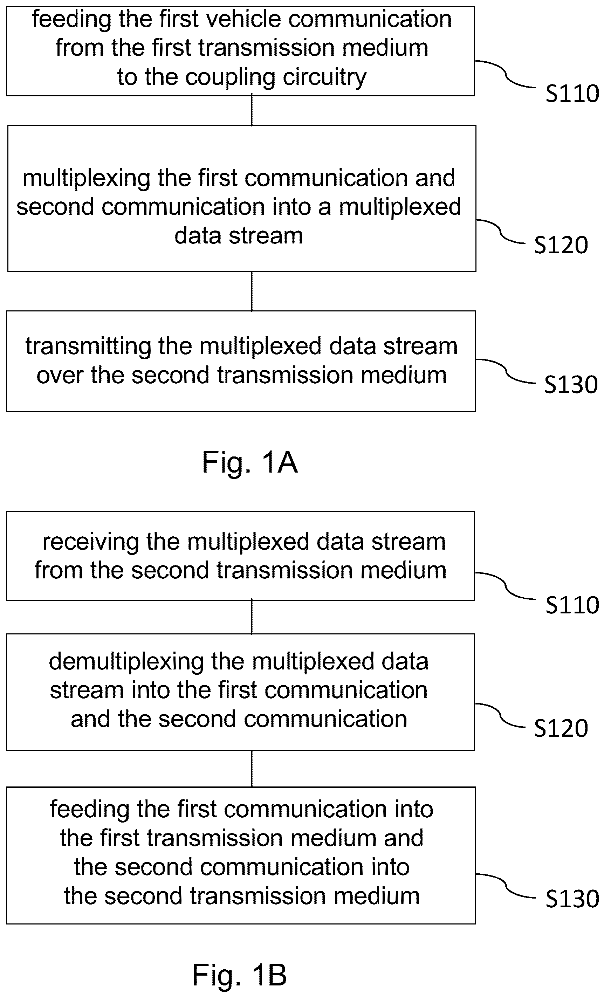

**Fig. 1A** depicts a schematic flow diagram of a method for multiplexing a first vehicle communication and a second vehicle communication. The method comprises the steps of:
- feeding S110 the first vehicle communication from a first transmission medium to a coupling circuitry;
- multiplexing S120, by the coupling circuitry, the first vehicle communication and the second vehicle communication into a multiplexed data stream; and
- transmitting S130 the multiplexed data stream over the second transmission medium.

**Fig. 1B** depicts the opposite process, at a receiver of the multiplexed data stream. This method includes the steps of:
- receiving S210 the multiplexed data stream from the second transmission medium;
- demultiplexing S220, by a coupling circuitry, the multiplexed data stream into the first vehicle communication and into the second vehicle communication; and
- feeding S230 the first vehicle communication into the first transmission medium and the second vehicle communication into the second transmission medium.

These methods or part thereof may also be a computer-implemented method. Embodiments are also intended to cover program storage devices, e.g., digital data storage media, which are machine or computer readable and encode machine-executable or computer-executable instructions, wherein the instructions perform some or all of the acts of the above-described methods, when executed on the computer or processor.

Thus, embodiments relate also to a computer-implemented method. In addition, all function further described below in conjunction with a communication system can be implemented as further optional method steps. Moreover, the order of steps may not be important to achieve the desired effect.

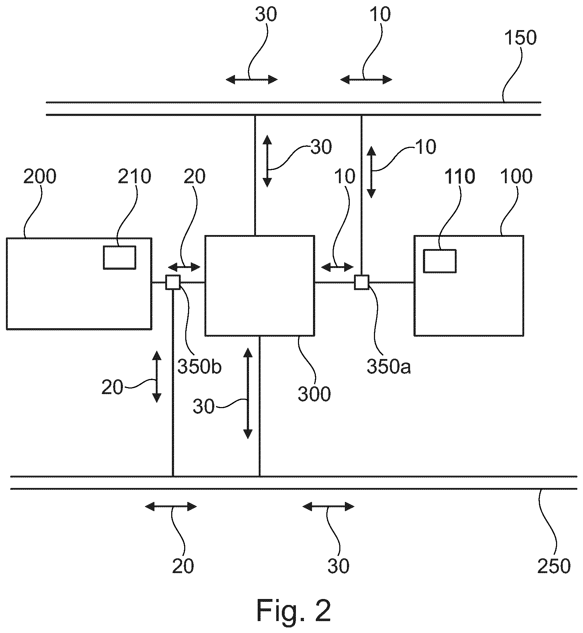

**Fig.** 2 depicts an embodiment for a communication system which includes a first transceiver 100, a second transceiver 200, and a coupling circuitry 300. The first transceiver 100 is connected to a first transmission medium 150 for carrying out a first communication 10. The second transceiver 200 is connected to a second transmission medium 250 for carrying out a second communication 20. The coupling circuitry 300 is connected to the first transceiver 100 and to the first transmission medium 150 and is connected to the second transceiver 200 and to the second transmission medium 250. The depicted communication system includes a first switching device 350a and second switching device 350b. The first switching device 350a is arranged between the first transceiver 100 and the coupling circuitry 300 and is configured to open or close a communication channel from the first transceiver 100 to the coupling circuitry 300. The second switching device 350b is connected between the second transceiver 200 and the coupling circuitry 300 and is configured to open or close a communication channel from the second transceiver 200 to the coupling circuitry 300. The first and second communications can again be vehicle communications.

The first transmission medium 150 may be a CAN-bus, and the second transmission medium 250 may be an automotive Ethernet-bus. It may also be the other way around, i.e. the first transmission medium 150 may be an Ethernet-bus, and the second transmission medium 250 may be a CAN-bus. Furthermore, the first transceiver 100 may include a first error detector 110. The second transceiver 200 may include a second error detector 210. The first error detector 110 may be adapted to detect an error in the data transmission over the first transition medium 150. Upon such detection, the first error detector 110 may trigger the first switching device 350a to feed the first communication 10 to the coupling circuitry 300. Optionally, the data connection to the first transmission medium 150 may be interrupted. Likewise, the second error detector 210 may be adapted to detect an error in the data transmission over the second transition medium 250. Upon such detection, the second error detector 210 may trigger the second switching device 350b to feed the second communication 20 to the coupling circuitry 300. Optionally, the data connection to the second transmission medium 250 may be interrupted.

It is understood that this controlling and other control operations within this disclosure means that respective control signals can be issued and transmitted to the components to cause the respective operation. The respective control signals may be transmitted over the available network structure (available transmission media) or over separate control lines (not shown in the drawings), which are not shown in the drawings.

The coupling circuitry 300 is adapted to multiplex both the first vehicle communication 10 and the second vehicle communication 20 and to generate the multiplexed data stream 30. The multiplexed data stream 30 or part thereof can be transmitted to the first transmission medium 150 and/or to the second transmission medium 250 dependent on an error detection. For example, if the first error detector 110 detects an error on the first transmission medium 150, the multiplexed data stream 30 is forwarded to the second transmission medium 250. Similarly, if the second error detector 210 detects an error on the second transmission medium 250, the coupling circuitry 300 forwards the multiplexed data stream 30 to the first transmission medium150.

The coupling circuitry 300 may receive the second vehicle communication 20 from the second switching device 350b, which may be controlled to feed the second vehicle communication 20 to the coupling circuitry 300 upon detection of an error by the first error detector 110. Alternatively, or additionally, the coupling circuitry 300 may be configured to receive the second vehicle communication 20 from the second transmission medium 250 (when it flawless operates). The coupling circuitry 300 may receive the first vehicle communication 10 from the first switching device 350a, which may be controlled to feed the first vehicle communication 10 to the coupling circuitry 300 upon detection of an error by the second error detector 120. Alternatively, or additionally, the coupling circuitry 300 may be configured to receive the first communication 10 from first transmission medium 150 (if flawless operating).

As it will be set out in more detail below, the communication system may operate analogously the other way around, i.e. not only as a transmitter of a multiplexed data stream 30 but also as a receiver of the multiplexed data stream 30. The communication is, in general, bi-directional, i.e. data flows in both directions. Therefore, the coupling circuitry 300 may likewise be configured to receive the multiplexed data stream 30 from the first transmission medium 150 and/or from the second transmission medium 250 and to demultiplex the multiplexed data stream 30 into the first communication 10 and into the second communication 20, and to feed the first communication 10 to the first transceiver 100 and the second communication 20 to the second transceiver 200 (either directly or via the optional first/second switching device).

Therefore, the vehicle communication system according to embodiments enables a redundant communication over an available infrastructure with two transmission media 150, 250 even if one of them does not operate correctly. This is possible, because the first vehicle communication 10 and/or the second vehicle communication 20 can be transmitted together with (or in parallel to) the additional multiplexed data stream 30 over the transmission media 150, 250.

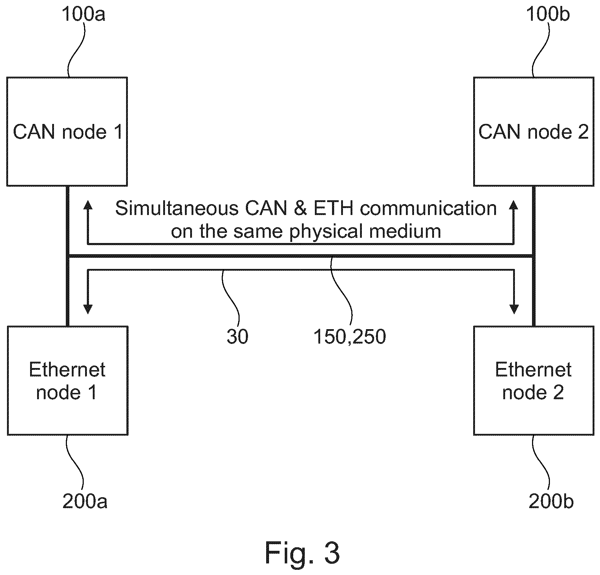

Fig. 3 illustrates an embodiment for the redundant communication between a CAN node 1 and a CAN node 2 and between an Ethernet node 1 and an Ethernet node 2, wherein the CAN node 1 may be the first transceivers 100a and CAN node 2 may be another first transceiver 100b, the Ethernet node 1 may be the second transceiver 200a, and the Ethernet node 2 may be another second transceiver 200b. The CAN node 1 and the Ethernet node 1 may belong to the same vehicle system (e.g. a brake system) or to different systems. Likewise, the CAN node 2 and the Ethernet node 2 may belong to the same vehicle system (e.g. a steering system) or to different systems. Therefore, both communication channels (CAN, Ethernet) may provide a redundant communication between the vehicle systems.

As described before, by generating the multiplexed data stream 30, the CAN communication (as an example for the first vehicle communication 10) and the Ethernet communication (as an example for the second vehicle communication 20) can be use simultaneously the same physical medium, namely the first transmission medium 150 or the second transmission medium 250. However, as long as both transmission media 150, 250 operate flawless both communications may utilize their own transmission medium.

According to embodiments, the communication system may also allocate the communications according to the needs to both available transmission media 150, 250 (e.g. to meet bandwidth requirements). The multiplexed data stream 30 or parts thereof can be transmitted over both transmission media 150, 250 to provide distribute the needed data bandwidth on the available transmission media 150, 250 or to provide a redundant data communication between the depicted transceivers 100a, 100b, 200a, 200b.

The combination of CAN-communication with the vehicle Ethernet communication provides the advantage that the operational frequency ranges are clearly separated. For example, according to ISO11898-1 the CAN-communication has a low-speed data rate (about 250kbps or below 1 Mbps) whereas the automotive Ethernet utilizes according to the standard 802.3bw-2015 (CL96) the 100Base-T1 (about 100Mbps). Thus, in the step of multiplexing the high-speed Ethernet communication and the low-speed CAN-communication may be combined or superposed (e.g. added) on a common transmission medium. The demultiplexing can be a separation (e.g. by filtering) of the two separated frequency components.

However, embodiments shall not be limited on these two communications but apply in the same way to other communications.

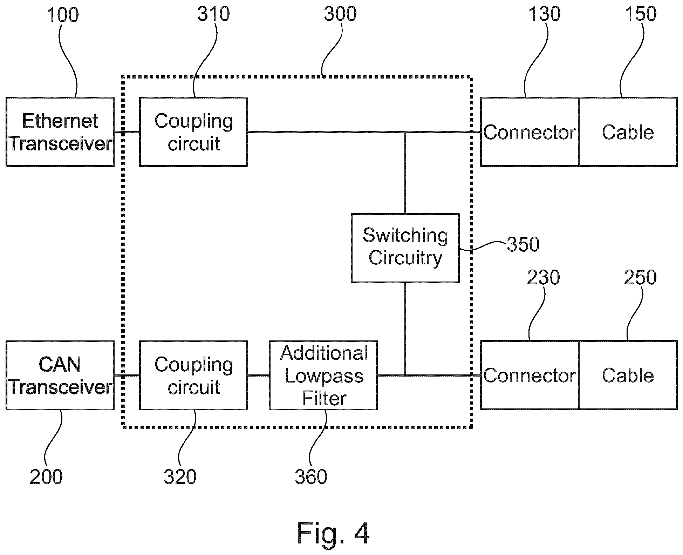

**Fig.** 4 depicts a communication system with further details according to further embodiments. The depicted communication system includes again a first transceiver 100 which may be an Ethernet transceiver and a second transceiver 200, which may be a CAN-transceiver. It is understood, the transceiver can also be interchanged, i.e. the first transceiver may likewise be the CAN-transceiver, and the second transceiver may likewise be the Ethernet-transceiver as in the embodiment of Fig. 3. The first transceiver 100 is connected to the first transmission medium 150 (a cable) via the coupling circuitry 300 and a first connector 130 which provides an interface to the exemplary first cable 150 (the first transmission medium). Likewise, the second transceiver 200 is connected to the second transmission medium 250 (a cable) via the coupling circuitry 300 and a second connector 230 which provides an interface to the exemplary second cable 250 (the second transmission medium).

The coupling circuitry 300 may include a first coupling circuit 310 and a second coupling circuit 320. The first coupling circuit 310 may provide interface (e.g. for the utilized protocol) between the first transceiver 100 the first connector 130 that may include a plug. The second coupling circuit 320 may likewise provide interface (e.g. for the utilized protocol) between the second transceiver 200 and the second connector 230 that again may include a plug. The first coupling circuit 310 may also be part of the first transceiver 100 and may not be included in the coupling circuitry 300. Likewise, the second coupling circuit 320 may also be part of the second transceiver 200 and may not be included in the coupling circuitry 300.

Moreover, the coupling circuitry 300 may include one or more filter devices 360 and a switching device 350 (or switching circuitry). The switching device 350 is configured to control a connection between the first transmission medium 150 and the second transmission medium 250 (e.g. open/close a data the connection). The exemplary filter device 360 may be configured to prevent a mixture of signals of the first transmission medium 150 and the second transmission medium 250 and vice versa. For example, the filter device 360 can include a lowpass filter preventing any high frequency data transmitted, e.g., from the Ethernet-side (the first transmission medium 150) to CAN-side (the second transmission medium 250). Thus, the exemplary low-pass filter on the CAN-side blocks Ethernet-signals from propagating on the CAN-side 250. A corresponding high-pass filter device may be arranged on the Ethernet-side to block CAN-signals from propagating on the Ethernet-side. However, a high-pass filter may be available already in the coupling circuit 310 so that there may be no need for an additional high-pass filter (but can be present). These filters allow a separation of the two communications in frequency (e.g. after de-multiplexing). The two communication protocols may thus share a common communication medium as utilized in embodiments. According to embodiments, the parameters of the filter components can be determined in a way that the filter does not degrade the CAN-signal quality but sufficiently filters out the Ethernet signals by which the Ethernet signals do not influence the CAN communication.

Therefore, the exemplary Ethernet/CAN-coupling with an extended circuitry according to embodiments extend existing CAN- and Ethernet-lines with their coupling circuits 310, 320 to a functional coupling circuitry 300 including switching circuitry 350 to selectively redirect communications on both sides.

Advantageously, embodiments are thus capable to electrically connect the CAN-transmission medium 150 and the Ethernet-transmission medium 250 without degrading the channel quality or attenuating the communication signals to such an extent which would jeopardize the reliability of the communication.

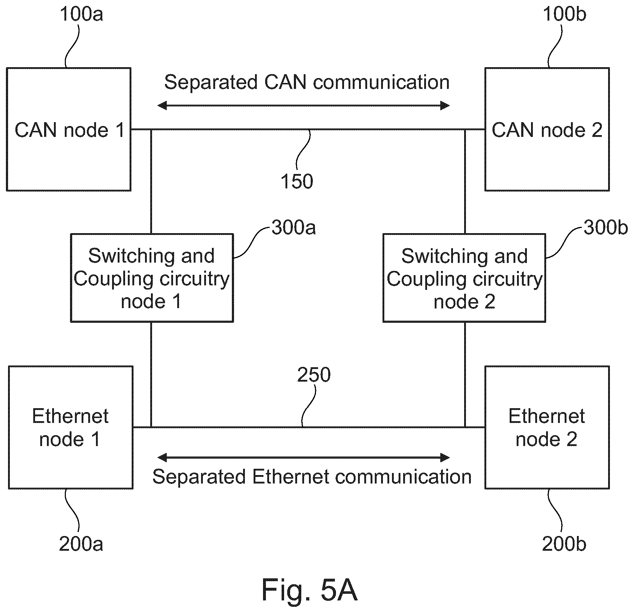

**Figs. 5A** - **5C** illustrate the different operational modes for the communication system according to embodiments.

**Fig. 5A** depicts the operational mode where the first transceiver 100a communicates with the other first transceiver 100b over the first transmission medium 150 (an exemplary CAN communication). Similarly, the second transceiver 200a communicates with the other second transceiver 200b over the second transmission medium 250 (an exemplary CAN communication). According to the depicted embodiment, the standard CAN-communication is implemented over the CAN-bus 150 and the Ethernet communication is implemented in parallel over a corresponding Ethernet line 250. This communication can be implemented as long as no interruption has been detected on either transmission medium 150, 250. Thus, the communication channels are separated, and the communication works in normal manner.

Nevertheless, the first transmission medium 150 and the second transmission medium 250 are coupled to each other by the coupling circuitry 300a at node 1 (in proximity to the first/second transceivers 100a, 200a) and by another coupling circuitry 300b at node 2 (in proximity to the first/second transceivers 100a, 200a). Both coupling circuitries 300a, 300b may provide same function as described before (e.g. multiplexing/demultiplexing) and may include the switching devices 350. Therefore, even though this function is not activated in Fig. 5A, the exemplary CAN communication and/or the exemplary Ethernet communication can be redirected over the coupling circuitries 300a, 300b to be multiplexed and to be transmitted as multiplexed data stream 30 over at least one the available transmission media 150, 250.

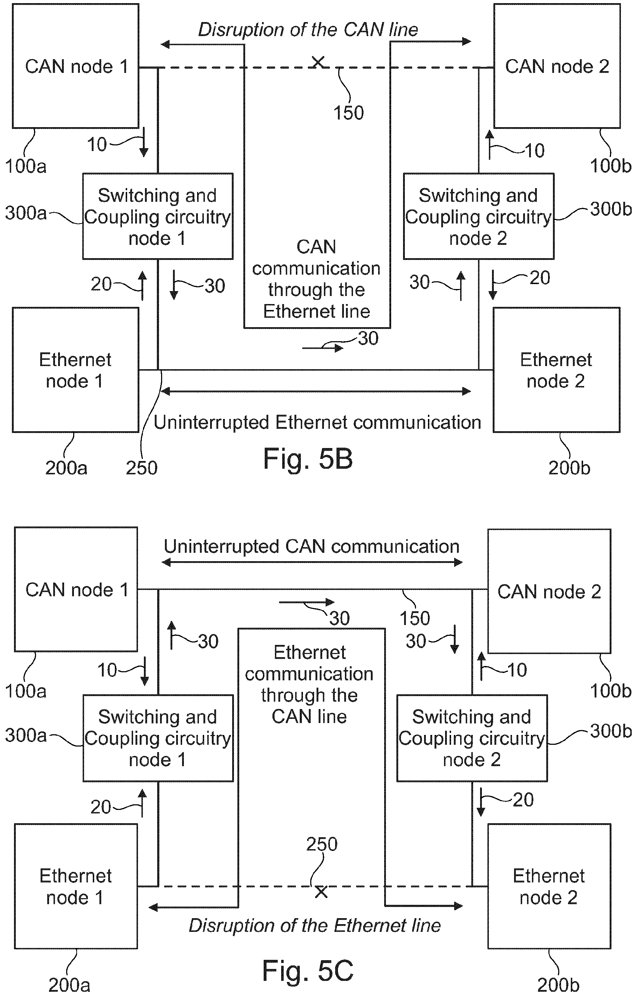

**Fig. 5B** depicts an operational mode for the communication system wherein a disruption has been detected on the first transmission medium 150 (the exemplary CAN-line). This detection can be performed by a detector 110 of the first transceiver 100a or of the other first transceiver 100b which may trigger to redirect the first communication 10 to the coupling circuitry 300a or to the other coupling circuitry 300b. The coupling circuitry 300a (or the other coupling circuitry 300b) will, in response to this detection, perform a multiplexing of data received from the first and second transceivers 100a, 100b (or from the other first and second transceivers 100b, 200b) to generate a multiplexed data stream 30 including both communications 10, 20. The multiplexed data stream 30 is then transmitted over the intact Ethernet communication line 250.

The multiplexed data stream 30 will be received by the other coupling circuitry 300b which couples the other first transceiver 100b (again an exemplary CAN node 2) with the other second transceiver 200b (again an exemplary Ethernet node 2). The other coupling circuitry 300b demultiplexes the multiplexed data stream 30 into the first communication 10 and the second communication 20 and transmits the first vehicle communication 10 to the other first transceiver 100b and the second vehicle communication 20 to the other second transceiver 200b.

As a result, both communications, the first communication 10 and the second communication 20, are transmitted from the first/second transceivers 100a, 200a to the other first/second transceivers 100b, 200b. No information is lost - even though the exemplary CAN-communication line 150 has been interrupted or has shown some malfunctioning affecting the reliability of the communication over the communication lines. According to embodiments, the second vehicle communication 20 is only transmitted as the multiplexed data stream 30 over the second transmission medium 250. This provides the advantage that no additional bandwidth is needed, although all data (CAN and Ethernet) is still transmitted.

**Fig.** 5C illustrates the other example, where the disruption has occurred along the exemplary Ethernet communication line 250 so that an Ethernet node 1 and an Ethernet node 2 cannot connect directly to each other. Now, the exemplary CAN communication line 150 is intact. Again, this disruption or malfunctioning can be detected by the second transceiver 200a or by the other second transceiver 200b or by any other detector. Upon detection, the data traffic between the second transceiver 200a to the other second transceiver 200b is redirected to the coupling circuitries 300a, 300b, where the first communication 10 is multiplexed with the second communication 20 to generate again the multiplexed data stream 30. This multiplexed data stream 30 is then transmitted over the flawlessly operating CAN line 150 to the other coupling circuitry 300b. The other coupling circuitry 300b demultiplexes the multiplexed data stream 30 into the first data stream 10 and the second data stream 20. The first data stream 10 is then forwarded to the other first transceiver 100b. The second data stream 20 is then forwarded to the other second transceiver 200b.

It is understood that the CAN-line 150 might be physically able to transmit higher frequency Ethernet communication signals. It is further understood that the original first communication 10 and/or the second communication 20 do not need to be transported in parallel to the multiplexed data stream 30 because the multiplexed data stream 30 includes all information which was originally part of the first communication 10 and of the second communication 20.

The disruption may be caused by faulty wires or pins and in this state the intact Ethernet or CAN wires act as a redundant physical medium to the CAN or Ethernet communication and which embodiments use as medium for the multiplexed data stream 30.

Advantageous aspects of embodiments can be summarized as follows:
According to embodiments, a multiplexed communication solution comprises of two nodes connected to each other with multiple communication channels 150, 250, which can multiplex a slower communication with a faster communication on a shared physical medium, thus providing a redundant connection to the communication.

According to further embodiments, a low-speed communication and a high-speed communication separated in frequency can use a shred physical medium.

According to further embodiments, a switching circuitry (or coupling circuitry 300) provides connection between a slow speed communication and a high-speed communication.

According to further embodiments, the switching circuit 300 connects the low-speed communication channel to the high-speed physical medium if a connection fault is detected on the low-speed physical medium.

According to further embodiments, the switching circuit 300 connects the high-speed communication channel to the low-speed physical medium if a connection fault is detected on the high-speed physical medium.

According to further embodiments, a lowpass filter 360 separates the high-speed communication from the low-speed communication.

According to further embodiments, the physical medium of the low-speed communication channel can act as the redundant communication medium for the high-speed communication channel as a shared medium.

According to further embodiments, the physical medium of the high-speed communication channel can act as the redundant communication medium for the low-speed communication channel as a shared medium.

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures, including any functional blocks labeled such as "device", "circuitries" etc., may be provided through the use of dedicated hardware, such as "a signal provider", "a signal processing unit", "a processor", "a controller", etc. as well as hardware capable of executing software in association with appropriate software. Moreover, any entity described herein as "device", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: first vehicle communication
- 20: second vehicle communication
- 30: multiplexed data stream
- 100: first transceiver
- 110: first error detector
- 130: first connector
- 150: first transmission medium
- 200: second transceiver
- 210: second error detector
- 230: second connector
- 250: second transmission medium
- 300: coupling circuitry
- 310: first coupling device
- 320: second coupling device
- 350: switching device
- 360: filter device

## Claims

1. A method for multiplexing a first vehicle communication (10) and a second vehicle communication (20), the first vehicle communication (10) being adapted to use a first frequency band on a first transmission medium (150), and the second communication (20) being adapted to use a second frequency band that differs from the first frequency band on a second transmission medium (250) that differs from the first transmission medium, the first transmission medium (150) and the second transmission medium (250) being coupled by a coupling circuitry (300),
**characterized by:**
- feeding (S110) the first vehicle communication (10) from the first transmission medium (150) to the coupling circuitry (300);
- multiplexing (S120), by the coupling circuitry (300), the first vehicle communication (10) and second vehicle communication (20) into a multiplexed data stream (30); and
- transmitting (S130) at least part of the multiplexed data stream (30) over the second transmission medium (250).

2. The method according to claim 1, wherein the step of feeding (S110) is performed by at least one switching device (350) that opens a data channel from the first communication medium (150) to the coupling circuity (300) to transmit a copy of or to divert the first vehicle communication (10) to the coupling circuitry (300).

3. The method according to claim 1 or claim 2, further comprising:
detecting a disruption of the first vehicle communication (10) and, upon detecting the disruption, starting the step of feeding (S110).

4. The method according to claim 2, wherein the first vehicle communication (10) is diverted to the coupling circuitry (300), wherein the step of transmitting (S130) further includes transmitting at least part of the multiplexed data stream (30) over the first transmission medium (150), wherein the part transmitted over the first transmission medium (150) differs from the part transmitted over the second transmission medium (250).

5. The method according to any one of claims 1 to 4, wherein a data transmission rate of the first vehicle communication (10) differs from a data transmission rate of the second vehicle communication (20) making one of the first vehicle communication (10) and the second vehicle communication (20) a low-speed communication and the other a high-speed communication,
and wherein in the step of multiplexing (S120) the high-speed communication and the low-speed communication are superposed.

6. A method for demultiplexing a multiplexed data stream (30) in a vehicle, the multiplexed data stream (30) includes a first vehicle communication (10) and a second vehicle communication (20), the first vehicle communication (10) being adapted to use a first frequency band on a first transmission medium (150), and the second vehicle communication (20) being adapted to use a second frequency band that differs from the first frequency band on a second transmission medium (250) that differs from the first transmission medium (150), the first transmission medium (150) and the second transmission medium (250) being coupled by a coupling circuitry (300),
**characterized by:**
- receiving (S210) the multiplexed data stream (30) from the second transmission medium (250);
- demultiplexing (S220), by the coupling circuitry (300), the multiplexed data stream (30) into the first vehicle communication (10) and the second vehicle communication (20); and
- feeding (S230) the first vehicle communication (10) to the first transmission medium (150) and the second vehicle communication (20) to the second transmission medium (250).

7. The method according to claim 6, wherein a data transmission rate of the first vehicle communication (10) differs from a data transmission rate of the second vehicle communication (20) making one of the first vehicle communication (10) and the second vehicle communication (20) a low-speed communication and the other a high-speed communication, wherein in the step of demultiplexing (S220) the high-speed communication and the low-speed communication are separated in the multiplexed data stream (30), the step of demultiplexing (S220) further including:
filtering the first vehicle communication (10) or the second vehicle communication (20) to suppress a mixing of high-speed communication signals and low-speed communication signals.

8. The method according to any one of claims 1 to 7, wherein each of the first vehicle communication (10) and the second vehicle communication (20) is a communication utilizing a standard selected from a group comprising: automotive ethernet, controller area network, CAN, local area interconnect network, LIN, common industrial protocol, CIP, AK-protocol.

9. A communication system for a first vehicle communication (10) and a second vehicle communication (20),
**characterized by:**
a first transceiver (100) configured to carry out the first vehicle communication (10) in a first frequency band on a first transmission medium (150);
a second transceiver (200) configured to carry out the second vehicle communication (20) in a second frequency band that differs from the first frequency band on a second transmission medium (250) that differs from the first transmission medium (150); and
a coupling circuitry (300) coupling the first transmission medium (150) and the second transmission medium (250) and being adapted
to multiplex the first vehicle communication (10) and the second vehicle communication (20) into a multiplexed data stream (30) and to transmit the multiplexed data stream (30) over the second transmission medium (250), and/or to demultiplex the multiplexed data stream (30) into the first communication (10) and the second communication (20) and to feed the first vehicle communication (10) into the first transceiver (100) and to feed the second vehicle communication (20) into the second transceiver (200).

10. A vehicle with a communication system of claim 9.
